# EUROPÄISCHE PATENTSCHRIFT

(11) **EP 0 414 177 B1**
(45) Veröffentlichungstag und Bekanntmachung des Hinweises auf die Patenterteilung: **08.11.1995**
(21) Anmeldenummer: 90115871.7
(22) Anmeldetag: 18.08.1990
(51) Int. Cl.: G01F 1/115, G01F 1/075, G01F 1/10

(54) **Impulsgebereinrichtung für einen Wasserzähler**
Pulse generating device for a water meter
Dispositif générateur d'impulsions pour un compteur d'eau

(30) Priorität: 19.08.1989 DE 3927363
(43) Veröffentlichungstag der Anmeldung: 27.02.1991
(73) Patentinhaber: ABB Kent Messtechnik GmbH, D-68623 Lampertheim (DE)
(72) Erfinder: Becker, Rudolf, D-6700 Ludwigshafen (DE); Kremer, Gerd, D-6800 Mannnheim-Wallstadt (DE); Schiller, Hartmut, D-6800 Mannheim 31 (DE); Wawretschka, Günter, D-6837 St. Leon-Rot 1 (DE)
(74) Vertreter: Rupprecht, Klaus, Dipl.-Ing.

(56) Entgegenhaltungen:
- EP-A- 0 021 978
- EP-A- 0 132 167
- DE-A- 3 340 508

## Beschreibung

Die Erfindung betrifft eine Impulsgebereinrichtung für einen Wasserzähler nach dem Oberbegriff des Anspruchs 1.

Eine derartige Impulsgebereinrichtung für Wasserzähler ist aus der DE-PS 33 40 508 bekanntgeworden. Bei dieser Impulsgebereinrichtung sind innerhalb des Zählwerks Trägerscheiben vorgesehen, an deren Außenumfang Magnete angeordnet sind, die als Impulsgeber dienen und die mit einem im Wirkbereich des bzw. der Impulsgeber liegenden Impulsaufnehmer zusammenwirken, wobei dessen Signale über eine elektrische Fernleitung weitergeleitet werden.

Aus der DE-PS 33 40 508 ist bekanntgeworden, die Impulsgeber magnetisch bzw. induktiv oder optisch mit den Impulsaufnehmern zusammen wirken zu lassen. Wie die induktive Zusammenwirkung ausgestaltet sein soll, ist hieraus nicht zu entnehmen.

Aus der EP-A-0 021 978 und der EP-A-0 132 167 ist es bekannt, die elektrisch leitenden Flügel eines von der Wärmeströmung angetriebenen Flügelrades als Impulsgeber für einen induktiven Impulsaufnehmer zu verwenden und dadurch die Drehzahl des Flügelrades zu erfassen, wobei EP-A-0 132 167 als Alternative ein aus Plastik bestehendes Flügelrad offenbart, in dessen Flügel Metallplättchen eingesetzt sind.

Aufgabe der Erfindung ist es, ausgehend von einer Impulsgebereinrichtung nach der DE-PS 33 40 508 eine Impulsgebereinrichtung mit induktivem Zusammenwirken zwischen Impulsgeber und Impulsaufnehmer zu schaffen, die einfach aufgebaut und schnell montierbar ist.

Diese Aufgabe wird durch die im Anspruch 1 und Anspruch 10 gekennzeichneten Merkmale gelöst. Zweckmäßige Ausgestaltungen und Weiterbildungen der Erfindung sind in den Unteransprüchen genannt.

Ein Vorteil der erfindungsgemäßen Lösung ist, daß die problematische Befestigung von mehreren, in etwa gleichen Abständen auf dem Umfang der Trägerscheibe zu verteilenden Metallplättchen mit Hilfe eines auf dem Außenumfang der Trägerscheibe aufliegenden Halteelement wesentlich erleichtert wird. Das Halteelement besteht aus isolierendem Material, um das induktive Feld zwischen den als Impulsgeber wirkenden Leiterplättchen und dem Impulsaufnehmer nicht zu beeinflussen.

Die am Rand der Trägerscheibe angebrachten Plättchen wirken mit einem Impulsgeber zusammen, der - ähnlich wie bei der Ausführung nach DE-PS 33 40 508 - in Längsnuten auf der Außenfläche einer das Zählergehäuse abschließenden Abdeckkappe eingeschoben ist.

In besonders vorteilhafter Ausgestaltung werden die Metallplättchen mittels eines um den Umfangsrand der Trägerscheibe geschlungenen Klebefolienbandes aus isolierendem Material aufgebracht. Zur Montage werden dann einfach an den entsprechenden Stellen auf die Klebeseite der Klebefolie Metallplättchen aufgelegt und um den Außenumfang der Trägerscheibe herumgeschlungen. Diese Befestigungsart ist sehr einfach und leicht auszuführen.

Eine weitere Ausgestaltung der Erfindung kann dahin gehen, daß die Metallplättchen auf dem Umfangsrand der Trägerscheibe mittels eines Klemmelementes festgeklemmt sind, wobei jedes Metallplättchen in einer daran angepaßten Nut am Umfangsrand angepaßt und von dem Klemmelement festgehalten ist.

Eine besondere Ausgestaltung kann dahin gehen, daß das die Metallplättchen an der Trägerscheibe festhaltende Klemmelement auf seiner Außenseite verspiegelte Flächen aufweist, so daß die Trägerscheibe mit den Metallplättchen wegen der erfindungsgemäß ausgebildeten Außenfläche des Klemmelementes gleichzeitig auch optisch abgetastet werden kann.

Die verspiegelten Flächen können vorzugsweise in in axialer Richtung verlaufenden, auf der Außenfläche des Klemmelementes eingebrachten rillenartigen Vertiefungen angeordnet sein.

Durch diese erfindungsgemäße Lösung kann die Impulsgebereinrichtung induktiv und/oder optisch abgetastet werden, was auch wahlweise erfolgen kann.

In bevorzugter Weise dient als Halteelement eine Isolierstoffplatte, an deren Umfang senkrecht dazu verlaufende, nach innen federnde Arme angeordnet sind, welche die Plättchen in die Nuten drücken. Zusätzlich können an den Enden der Arme nach innen ragende Nasen angeformt sein, die im montierten Zustand hinter den plattenabseitigen Rand der Trägerscheibe greifen.

Selbstverständlich können die verspiegelten Flächen auch auf den Außenseiten der Arme angebracht sein.

Eine weitere, sehr einfache Maßnahme, mehrere Metallplättchen am Umfangsrand einer Trägerscheibe anzubringen, besteht darin, daß die Platte selbst eine Metallplatte ist, an deren Umfang eine der Anzahl der erforderlichen Metallplättchen entsprechende Anzahl von Laschen radial vorspringen, deren Abmessungen denen der einzelnen Metallplättchen entsprechen und die zur Montage um den Umfangsrand der Trägerscheibe umgebogen sind.

Auch bei dieser Lösung kann die Außenfläche der Laschen verspiegelt sein.

Weitere Ausgestaltungen und Verbesserungen der Erfindung sind den weiteren Unteransprüchen zu entnehmen.

Anhand der Zeichnung, in der einige Ausführungsbeispiele der Erfindung dargestellt sind, sollen die Erfindung sowie weitere vorteilhafte Ausgestaltungen und Verbesserungen der Erfindung näher erläutert und beschrieben werden.

Es zeigen:
- Figur 1: eine schematische Darstellung einer Trägerscheibe mit mehreren auf dem Außenumfang der Trägerscheibe aufgebrachten Metallplättchen, welche Trägerscheibe sich im Bereich einer Wandung einer Abdeckhaube befindet.
- Figur 2: eine erste Art der Befestigung der Metallplättchen an der Trägerscheibe,
- Figur 3: eine weitere Ausführungsform der Erfindung,
- Figur 4: eine Aufsicht auf eine Metallplatte,
- Figur 5: eine Seitenansicht auf eine Trägerscheibe mit einer darauf befestigten Metallplatte gemäß Figur 4,
- Figur 6: eine teilweise geschnittene Aufsicht auf eine weitere Ausgestaltung der Erfindung und
- Figur 7: eine Teilschnittansicht der Ausführung nach Fig. 6.

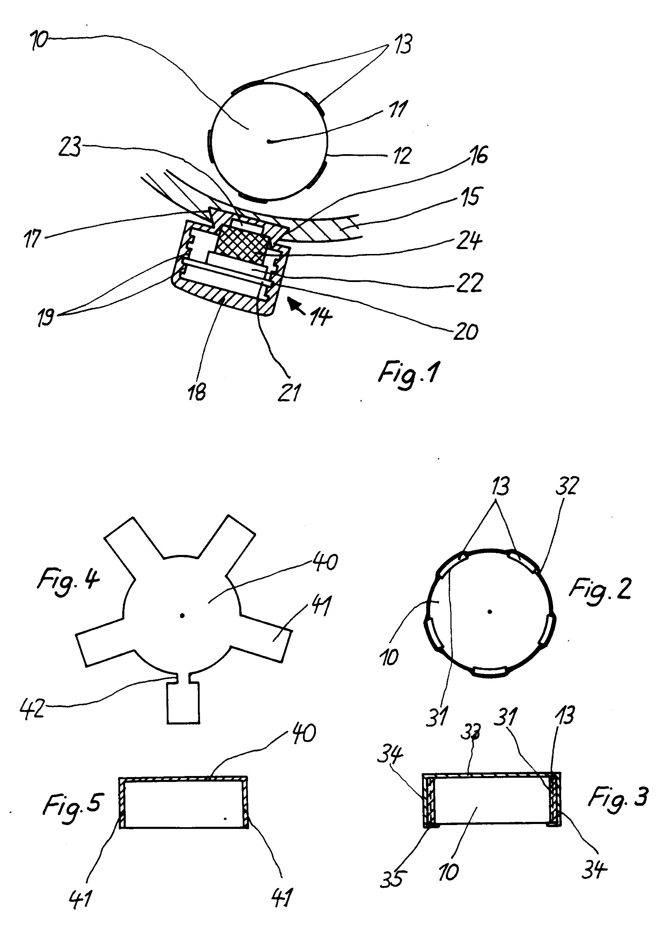

Ein Wasserzähler, wie er in der DE-PS 33 40 508, auf die hier ausdrücklich Bezug genommen wird, beschrieben ist, besitzt ein Zählwerk, in das wenigstens eine Trägerscheibe 10 integriert ist. Diese Trägerscheibe ist um eine Achse 11 drehbar und am Umfangsrand 12 der Trägerscheibe befinden sich mehrere Metallplättchen 13, die als Impulsgeber wirken und die mit einem induktiven Aufnehmer 14 zusammenwirken. Das Zählwerk ist umschlossen von einem Gehäuse 15, das in Figur 1 nur teilweise zu sehen ist. Auf der Außenumfangsfläche des Gehäuses 15 befindet sich eine schwalbenschwanzförmige Nut 16, in die ein schwalbenschwanzförmiger, daran angepaßter Fortsatz 17 des Impulsaufnehmers eingesteckt ist. Der Impulsaufnehmer besitzt ein innen hohles Impulsaufnehmergehäuse 18, an dessen sich gegenüberliegenden Wänden Vorsprünge 19 angeordnet sind, die zwischen sich Nuten 20 bilden, in welche eine Leiterplatte oder mehrere Leiterplatten 21 eingesteckt werden können, an deren gehäuseseitiger Fläche ein T-förmiger Kern 22 befestigt ist, um dessen Steg 23 eine Spule 24 herumgewickelt ist. Beim Vorbeilaufen der Metallplättchen 13 an dem Kern 23 mit der Spule 24 wird das elektrisch erregte System 22 bis 24 gedämpft und gibt somit jedesmal ein Signal ab.

Das Problem besteht darin, wie man die Metallplättchen 13 auf dem Außenumfangsrand der Trägerscheibe 10 befestigen kann.

Gemäß Ausführungsform der Figur 2 sind in den Umfangsrand in axialer Richtung verlaufende Nuten 31 angebracht, in die die Metallplättchen 13 eingelegt sind, wobei um die Trägerscheibe 10 zusammen mit den Metallplättchen 13 ein Isolierfolienklebeband 32 herumgelegt wird. Dabei besteht die Möglichkeit, die Nuten 31 wegzulassen und die Isolierplättchen auf den glatten Außenumfangsrand der Trägerscheibe 10 aufzukleben.

Die Figur 3 zeigt eine Ausgestaltung mit Nuten 31, in die die Plättchen 13 eingesetzt sind. Zur Halterung ist eine Isolierstoffplatte 33 vorgesehen, die an ihrem Außenumfangsrand senkrecht dazu verlaufende Arme 34 aufweist, die die Plättchen 13 in die Nuten 31 drücken. Damit die Platte 33 nicht ohne weiteres gelöst werden kann, besitzen die Arme 34 an ihren freien Enden nach innen ragende Nasen 35, die die Trägerscheibe 10 umgreifen.

Die Figur 4 zeigt eine Platte 40 aus Metall, an deren Außenumfang vorspringende Nasen 41 angeformt sind, deren Abmessungen den Metallplättchen entsprechen. Wie aus Figur 5 ersichtlich, wird die Metallplatte 40 auf die flache Seite der Trägerscheibe 10 gelegt und die Laschen 41 um den Umfangsrand herum umgebogem. Damit eine Beeinflussung nebeneinanderliegender Laschen über die metallische Scheibe 40 vermieden ist oder zumindest verringert ist, können die Laschen mittels in Vergleich zur Umfangsfläche der einzelnen Lasche schmalen Stegen 42 mit der Metallplatte 40 verbunden sein.

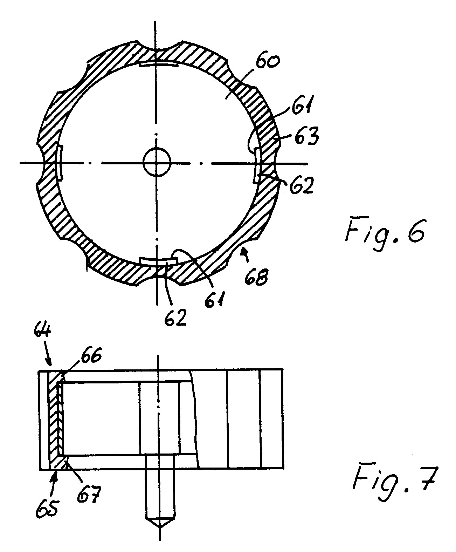

Eine weitere Ausgestaltung der Erfindung ist in den Figuren 6 und 7 dargestellt. Auf dem Außenumfang einer Trägerscheibe 60 sind Nuten 61 eingebracht, in die Metallplättchen 62 eingelegt sind. Um den Umfangsrand der Trägerscheibe 60 ist ein Klemmelement 63 in Form eines Klemmringes geschnappt, welcher an seinen Stirnkanten 64 und 65 nach innen ragende Rastleisten 66 und 67 aufweist, deren lichter Innendurchmesser kleiner ist als der Außendurchmesser der Trägerscheibe 60. Die Rastleisten können umlaufend oder nur als Nasen ausgebildet sein oder auch nur einen Teilbereich des Umfangs überdecken. Dadurch werden die Metallplättchen 62 in ihren Nuten 61 festgehalten. Dieses Klemmelement ist in der Figur 4 geschnitten dargestellt, um die Lage der Metallplättchen darzustellen. Damit das Klemmelement festgerastet werden kann, muß es eine bestimnmte Elastizität aufweisen, damit es in geeigneter Weise verformt werden kann. Gegebenenfalls kann der Klemmring auch axiale Schlitze aufweisen (nicht gezeigt), damit er leichter verformt werden kann.

Die Außenfläche des Klemmelementes 63 besitzt mehrere in axialer Richtung verlaufende rillen- bzw. kreissegmentförmige Nuten oder Rillen 68, deren Nutfläche verspiegelt sind, so daß sie einen von einer Lichtquelle etwa radial auf sie abgestrahlten Lichtstrahl zu einer Lichtempfangsquelle reflektieren, wodurch bei der Lichtempfangsquelle Impulse empfangen werden, die in elektrische Signale umgewandelt werden und ein Maß für die Drehzahl der Impulsgebereinrichtung sind. Die Bereiche zwischen den Nuten 68 sind so ausgebildet und gestaltet, daß sie den Lichtstrahl praktisch nicht reflektieren.

In den Figuren 6 und 7 sind vier Metallplättchen und acht Nuten vorhanden. Selbstverständlich kann jede beliebige oder erforderliche Anzahl an Metallplättchen und Nuten vorgesehen sein.

Durch diese erfindungsgemäße Lösung kann die Trägerscheibe mit Klemmelement wahlweise entweder induktiv oder optisch abgetastet werden, so daß ein mit dieser Impulsgeberanordnung ausgestatteter Wasserzähler ohne Austausch der Impulsgebereinrichtung, was normalerweise nur bei einem Eingriff in den Wasserzähler erfolgen kann, von induktivem Abgriff auf optischen Abgriff umgebaut werden kann.

Die in der Zeichnung Figur 6 und 7 dargestellte Lösung ist auch dann verwirklicht, wenn die verspiegelten Teilflächen an einer radialen Fläche der Trägerscheibe oder des Klemmelementes vorgesehen sind und das Licht in axialer Richtung abgestrahlt und reflektiert wird.

## Patentansprüche

1. Impulsgebereinrichtung für einen Wasserzähler, mit einem Zählwerk, das mindestens eine Trägerscheibe (10) für mindestens je einen Impulsgeber (13) aufweist, und mit mindestens einem Impulsaufnehmer (14), der außerhalb des Wasserzählergehäuses angeordnet ist, wobei Impulsgeber (13) und Impulsaufnehmer (14) induktiv miteinander zusammenwirken, **dadurch gekennzeichnet**, daß als Impulsgeber (13) mehrere Plättchen aus elektrisch leitendem Material dienen und daß diese auf dem Außenumfangsrand der Trägerscheibe (10) mit Hilfe eines Halteelementes (32, 33, 63) in ihrer Lage festgehalten sind, wobei das Halteelement (32, 63) aus isolierendem Material besteht und die Trägerscheibe (10) umgreift.

2. Impulsgebereinrichtung nach Anspruch 1, dadurch gekennzeichnet, daß das Halteelement als ein die Metallplättchen (13) erfassendes um den Umfangsrand geschlungenes Klebefolienband (32) aus isolierendem Material ausgebildet ist.

3. Impulsgebereinrichtung nach Anspruch 2, dadurch gekennzeichnet, daß die Metallplättchen (13) zur Montage an den entsprechenden Stellen auf die Klebeseite des Klebefolienbandes (32) aufgelegt und um den Außenumfang der Trägerscheibe (10) herumgeschlungenen sind.

4. Impulsgebereinrichtung nach Anspruch 1, dadurch gekennzeichnet, daß das Halteelement als ein die Metallplättchen (13) auf dem Umfangsrand der Trägerscheibe (10) festklemmendes Klemmelement (63) ausgebildet ist, wobei jedes Metallplättchen (13) in einer daran angepaßten Nut (61) am Umfangsrand der Trägerscheibe eingepaßt und von dem Klemmelement (63) festgehalten ist.

5. Impulsgebereinrichtung nach Anspruch 4, dadurch gekennzeichnet, daß das Klemmelement (63) wenigstens eine verspiegelte Teilfläche aufweist, von der ein von einer Lichtquelle abgestrahlter Lichtstrahl zu einer Lichtempfangseinrichtung reflektiert wird, so daß die Impulsgebereinrichtung induktive und/oder optische Impulse abgibt.

6. Impulsgebereinrichtung nach Anspruch 4 oder 5, dadurch gekennzeichnet, daß das Klemmelement (63) ein Klemmring ist, der an seinen Stirnkanten nach innen vorspringende, ggf. unterbrochene Leisten (66, 67) aufweist, deren lichter Innendurchmesser kleiner ist als der Außendurchmesser der Trägerscheibe (60), so daß der Klemmring an der Trägerscheibe festrastbar ist.

7. Impulsgebereinrichtung nach Anspruch 1, dadurch gekennzeichnet, daß das Halteelement eine Isolierstoffplatte (33) mit deren Umfang senkrecht dazu verlaufenden, nach innen federnden Armen (34) ist, welche die Plättchen in die Nuten (30, 31) drücken.

8. Impulsgebereinrichtung nach Anspruch 7, dadurch gekennzeichnet, daß an den plattenabseitigen Enden der Arme (34) nach innenragende Nasen (35) angeformt sind, die im montierten Zustand hinter den plattenabseitigen Rand der Trägerscheibe (10) greifen.

9. Impulsgebereinrichtung nach Anspruch 5, dadurch gekennzeichnet, daß die Außenfläche des Klemmelementes (63) mit wenigstens einer axial verlaufenden Rille (68) versehen ist, deren Rillengrund verspiegelt ist, so daß lediglich die wenigstens eine Rille auf sie den von der Lichtquelle abgestrahlten Lichtstrahl zu der Lichtempfangseinrichtung reflektiert.

10. Impulsgebereinrichtung nach dem Oberbegriff von Anspruch 1, dadurch gekennzeichnet, daß auf einer der flachen Seiten der Trägerscheibe (10) eine Metallplatte (40) aufgebracht ist, an deren Umfang eine Anzahl der erforderlichen Impulsgeber entsprechende Anzahl von Laschen (41) radial vom Umfang aus vorspringen, wobei die Abmessungen der Laschen(41) nach innen um den Umfangsrand der Trägerscheibe (10) herum umgebogen und daran festgeklemmt sind.

11. Impulsgebereinrichtung nach Anspruch 10, dadurch gekennzeichnet, daß die Laschen (41) über in Umfangsrichtung verengte Stege (42) am Umfangsrand der Metallplatte (40) angeformt sind.

12. Impulsgebereinrichtung nach Anspruch 11, dadurch gekennzeichnet, daß die Außenflächen der Laschen (41) verspiegelt sind.

## Claims

1. Pulse generating device for a water meter, having a counting mechanism which has at least one carrier disc (10) for at least each pulse generator (13), and having at least one pulse pick-up (14) which is arranged outside the water meter housing, pulse generator (13) and pulse pick-up (14) interacting inductively with each other, characterized in that a plurality of platelets made of electrically conductive material are used as pulse generators (13) and in that these are held fixed in position with the aid of a holding element (32, 33, 63) on the outer periphery of the carrier disc (10), the holding element (32, 63) consisting of insulating material and encompassing the carrier disc (10).

2. Pulse generating device according to Claim 1, characterized in that the holding element is designed as an adhesive film tape (32) which is made of insulating material, is wrapped around the periphery and covers the metal platelets (13).

3. Pulse generating device according to Claim 2, characterized in that the metal platelets (13), for assembly, are placed at the corresponding locations on the adhesive side of the adhesive film tape (32) and are wrapped around the outer periphery of the carrier disc (10).

4. Pulse generating device according to Claim 1, characterized in that the holding element is designed as a clamping element (63) which clamps the metal platelets (13) firmly on the periphery of the carrier disc (10), each metal platelet (13) being fitted in a groove (61) matched to it on the periphery of the carrier disc and being firmly held by the clamping element (63).

5. Pulse generating device according to Claim 4, characterized in that the clamping element (63) has at least one silvered partial surface from which a light beam emitted by a light source is reflected to a light-receiving device, so that the pulse generating device emits inductive and/or optical pulses.

6. Pulse generating device according to Claim 4 or 5, characterized in that the clamping element (63) is a clamping ring which has on its front edges inwardly projecting, if appropriate interrupted, strips (66, 67) whose clear internal diameter is smaller than the external diameter of the carrier disc (60), so that the clamping ring can be locked firmly on the carrier disc.

7. Pulse generating device according to Claim 1, characterized in that the holding element is a plate of insulating material (33) having arms (34) of its periphery [sic] which extend at right angles thereto, spring inwards and which press the platelets into the grooves (30, 31).

8. Pulse generating device according to Claim 7, characterized in that inwardly projecting tabs (35) are integrally moulded on those ends of the arms (34) which are remote from the plate and, in the assembled state, the tabs engage behind the edge, of the carrier disc (10), which is remote from the plate.

9. Pulse generating device according to Claim 5, characterized in that the outer surface of the clamping element (63) is provided with at least one flute (68) running axially, the flute base of which is silvered, so that only the at least one flute reflects onto it [sic] the light beam, emitted by the light source, to the light receiving device.

10. Pulse generating device according to the preamble of Claim 1, characterized in that on one of the flat sides of the carrier disc (10) there is applied a metal plate (40) from whose periphery there project radially from the periphery a number of tabs (41) corresponding to number [sic] of required pulse generators, the dimensions of the tabs (41) [sic] being bent inwards around the periphery of the carrier disc (10) and being firmly clamped thereto.

11. Pulse generating device according to Claim 10, characterized in that the tabs (41) are integrally moulded above webs (42), which are narrowed in the peripheral direction, on the periphery of the metal plate (40).

12. Pulse generating device according to Claim 11, characterized in that the outer surfaces of the tabs (41) are silvered.

## Revendications

1. Dispositif générateur d'impulsions pour un compteur d'eau comprenant un mécanisme compteur qui présente au moins une roue de support (10) pour au moins un émetteur d'impulsions (13), et au moins un capteur d'impulsions (14) qui est disposé à l'extérieur du boîtier du compteur d'eau, l'émetteur d'impulsions (13) et le capteur d'impulsions (14) coopérant l'in avec l'autre par voie inductive, caractérisé par le fait que l'émetteur d'impulsions (13) comprend plusieurs plaquettes en un matériau électriquement conducteur et que ces dernières sont maintenues en position sur le bord périphérique extérieur de la roue de support (10) à l'aide d'un élément de maintien (32, 33, 63) qui est constitué de matière isolante et entoure la roue de support (10).

2. Dispositif générateur d'impulsions suivant la revendication 1, caractérisé par le fait que l'élément de maintien est réalisé sous la forme d'un ruban adhésif (32) en matière isolante, placé autour du bord périphérique de la roue de support et entourant les plaquettes métalliques (13).

3. Dispositif générateur d'impulsions suivant la revendication 2, caractérisé par le fait qu'en vue du montage, les plaquettes métalliques (13) sont posées aux endroits appropriés sur le côté adhésif du ruban adhésif (32), ce dernier étant placé autour du pourtour extérieur de la roue de support (10).

4. Dispositif générateur d'impulsions suivant la revendication 1, caractérisé par le fait que l'élément de maintien est réalisé sous la forme d'un élément de serrage (63) bloquant les plaquettes métalliques (13) par serrage sur le bord périphérique de la roue de support (10), chaque plaquette métallique (13) étant ajustée et maintenue par l'élément de serrage (63) dans une rainure (61) de forme adaptée sur le bord périphérique de la roue de support.

5. Dispositif générateur d'impulsions suivant la revendication 4, caractérisé par le fait que l'élément de serrage (63) présente au moins une surface partielle réfléchissante qui réfléchit vers un capteur de lumière un rayon lumineux émis par une source de lumière, de sorte que le dispositif générateur d'impulsions émet des impulsions inductives et/ou optiques.

6. Dispositif générateur d'impulsions suivant la revendication 4 ou 5, caractérisé par le fait que l'élément de serrage (63) est une bague de serrage qui présente sur ses bords frontaux des rebords (66, 67), le cas échéant interrompus, faisant saillie vers l'intérieur, dont le diamètre intérieur est inférieur au diamètre extérieur de la roue de support (60), de sorte que la bague de serrage peut être engagée élastiquement et encliquetée sur la roue de support.

7. Dispositif générateur d'impulsions suivant la revendication 1, caractérisé par le fait que l'élément de maintien est une plaque en matière isolante (33) comportant sur son pourtour des bras (34) s'étendant perpendiculairement à la plaque et faisant ressort vers l'intérieur, ces bras poussant les plaquettes dans les rainures (30, 31).

8. Dispositif générateur d'impulsions suivant la revendication 7, caractérisé par le fait que les bras (34) comportent, à leurs extrémités éloignées de la plaque, des nez (35) faisant saillie vers l'intérieur et s'engageant à l'état monté derrière le bord de la roue de support (10), éloigné de la plaque.

9. Dispositif générateur d'impulsions suivant la revendication 5, caractérisé par le fait que la surface extérieure de l'élément de serrage (63) est pourvue d'au moins une rainure (68) dirigée axialement, rendue réfléchissante sur son fond, de sorte que ladite rainure réfléchit vers un dispositif capteur de lumière le rayon lumineux émis par la source de lumière.

10. Dispositif générateur d'impulsions suivant le préambule de la revendication 1, caractérisé par le fait que sur l'un des côtés plats de la roue de support (10) est rapportée une plaque métallique (40) comportant sur son pourtour des pattes (41) dont le nombre correspond au nombre d'émetteurs d'impulsions nécessaires, qui font saillie radialement sur le pourtour, dont les dimensions correspondent à celles des plaquettes métalliques élémentaires et qui sont repliées vers l'intérieur autour du bord périphérique de la roue de support (10) et fixées par serrage à cette dernière.

11. Dispositif générateur d'impulsions suivant la revendication 10, caractérisé par le fait que les pattes (41) sont reliées au bord périphérique de la plaque métallique (40) par des branches (42) de largeur réduite dans la direction périphérique.

12. Dispositif générateur d'impulsions suivant la revebdication 11, caractérisé par le fait que les surfaces extérieures des pattes (41) sont réfléchisantes.
